# EUROPEAN PATENT APPLICATION

(11) **EP 4 364 552 A1**
(43) Date of publication of application: **08.05.2024**
(21) Application number: 23207175.3
(22) Date of filing: 31.10.2023
(51) Int. Cl.: A01D 41/14

(54) **AUTOMATIC SETTING OF HEADER FLOATATION ON SELF-PROPELLED WINDROWER**

(30) Priority: 01.11.2022 US 202217978503
(71) Applicant: CNH Industrial America LLC, New Holland, PA 17557 (US)
(72) Inventor: GAHRES, Ryan, Richland, 17087 (US); FAY, II,, Jeffrey B., Oxford, 19363 (US)
(74) Representative: Keltie LLP

(57) **Abstract**

An agricultural machine system (135) includes an agricultural work vehicle (100), an agricultural work machine (101), and a control system (129) operatively coupled with the agricultural work vehicle (100) and the agricultural work machine (101). The control system (129) includes a sensor (241, 556) configured for sensing an operative parameter and outputting an operative parameter signal corresponding to the operative parameter. A controller system (129) is configured for receiving the operative parameter signal and determining, based at least in part on the operative parameter signal, a floatation pressure for an on-ground floatation of the agricultural work machine (101).

## Description

### FIELD OF THE INVENTION

The present invention pertains to agricultural machine systems, and, more specifically, to self-propelled windrowers with mower-conditioner machines.

### BACKGROUND OF THE INVENTION

Generally speaking, forage (which can also be referred to herein as crop, crop material, forage crop, forage material, or forage crop material) is plant material that can be harvested and provided to livestock or other animals as fodder, including but not limited to cattle, sheep, goats, and horses, during, for example, the winter or at other times when pasture land has inadequate amounts of vegetation for livestock or other animals. Depending upon the processing of the forage, forage can be formed into hay or silage. Both hay and silage can be made from grass and legumes (or mixtures thereof), and silage can also be made from, for example, corn or wheat. Hay (whether grass hay, legume hay, or a mixture thereof) results from a process that includes planting (though the plant matter is often perennial), growing, cutting, drying, and storing. Depending upon location, grass hay can include, for example, orchard grass, timothy, fescue, brome, Bermuda grass, Kentucky bluegrass, and/or ryegrass, whereas legume hay can include, for example, alfalfa, clover, and/or birdsfoot trefoil. Silage (which can, at least in some circumstances, also be referred to as haylage) can involve causing the crop material to ferment.

Further, depending upon the desired end product with respect to the forage (i.e., hay or silage), a variety of forage processing operations can be involved, and these forage processing operations include haymaking operations and silage-making operations. Haymaking operations, for example, can include planting, cutting (which can be referred to as mowing), conditioning, tedding, raking, merging, chopping, baling, bale retrieval, transport, and/or storage, and silage-making operations can include not only planting and cutting but also chopping, baling, and/or ensiling (or at least some sort of covering). A variety of agricultural harvesting machines can be used to perform these operations. Such agricultural machines include planters, mowers, mower-conditioners, tedders, rakes, mergers, choppers, balers, and bale retrievers.

As indicated, one such agricultural harvesting machine is a mower-conditioner machine (which can also be referred to as a mower-conditioner). Such mower-conditioner machines can be formed as a header attachment to a self-propelled windrower, or, alternatively, a pull-type mower-conditioner coupled with a tractor. Farmers may operate such mower-conditioners to cut any sort of crop material (hay crop, wheat, etc.) from a field, to immediately condition the crop material, and to deposit the cut crop into swaths or windrows on the field. The cutting can be performed by a cutting mechanism of the mower-conditioner, the cutting mechanism (which can also be referred to as a cutter bar) being, for example, a series of rotary discs (which can be referred to as discs), or a sicklebar. Such conditioning can be performed by a pair of conditioning rolls (which can be referred to collectively as the conditioner) of the mower-conditioner, a crop mat flowing therebetween, and the conditioning can break, split, bend, crush, crack, and/or crimp the crop material, as is known. After conditioning the crop material, the crop material can engage a swath gate of the mower-conditioner and, optionally, windrow shields of the mower-conditioner or the self-propelled windrower, before being deposited on the ground. Alternatively, the conditioning can be performed by a conditioner formed not as conditioning rolls but as flails, as is known.

When the mower-conditioner is a header attachment to the self-propelled windrower (SPW), the SPW includes devices that attach the header to the SPW. These devices include hydraulic cylinder assemblies, namely lift cylinder assemblies (which can be referred to as lift actuators) configured for raising or lowering the header by way of a lift arm of the SPW, and a tilt cylinder assembly (which can be referred to as a tilt actuator) configured for tilting the header fore or aft by way of a tilt arm of the header.

Further, such SPW's and the mower-conditioner machine include a header floatation capability. The header can be lowered by the lift cylinder assemblies and enabled to float on the ground as the header traverses the ground, thereby enabling the header, for example, to rise, in a dampened manner (for example, using an accumulator), as the header encounters certain field features, such as raised terrain or fixed obstacles.

What is needed in the art is a relatively quick and efficient way to set the header floatation pressure.

### SUMMARY OF THE INVENTION

The present invention provides an agricultural machine system including an agricultural work vehicle, an agricultural work machine, and a control system configured for determining automatically a floatation pressure for an on-ground flotation of the agricultural work machine.

The invention in one form is directed to an agricultural machine system. The agricultural machine system includes an agricultural work vehicle, an agricultural work machine, and a control system operatively coupled with the agricultural work vehicle and the agricultural work machine. The control system includes a sensor configured for sensing an operative parameter and outputting an operative parameter signal corresponding to the operative parameter. A controller system is configured for receiving the operative parameter signal and determining, based at least in part on the operative parameter signal, a floatation pressure for an on-ground floatation of the agricultural work machine.

The invention in another form is directed to a control system of an agricultural machine system, the agricultural machine system including an agricultural work vehicle and an agricultural work machine, the control system being operatively coupled with the agricultural work vehicle and the agricultural work machine, the control system including: a sensor configured for: sensing an operative parameter; and outputting an operative parameter signal corresponding to the operative parameter; a controller system configured for: receiving the operative parameter signal; determining, based at least in part on the operative parameter signal, a floatation pressure for an on-ground floatation of the agricultural work machine.

The invention in yet another form is directed to a method of using an agricultural machine system, the method including the steps of: coupling operatively a control system with an agricultural work vehicle and an agricultural work machine, the control system including a sensor and a controller system; sensing, by the sensor, an operative parameter; outputting, by the sensor, an operative parameter signal corresponding to the operative parameter; receiving, by the controller system, the operative parameter signal; and determining, by the controller system, based at least in part on the operative parameter signal, a floatation pressure for an on-ground floatation of the agricultural work machine.

An advantage of the present invention is that it provides automatic setting of header floatation on the SPW with closed loop hydraulic floatation based on header weight. More specifically, a system is provided that can determine the weight of the header and calculate the proper floatation setting based on internal lift cylinder pressure, which eliminates the need for the operator to manually set the floatation and to manually check the actual header ground force. Thus, the present invention provides for using lift system pressure feedback to automatically set header floatation based on header weight and factory predetermined floatation settings specific to the header being utilized.

Another advantage of the present invention is that it provides such a system which is able to adjust the floatation pressure to accommodate varying header weight throughout operation due to crop and soil accumulation, to maintain a constant ground force.

Yet another advantage of the present invention is that it eliminates the ability of the operator to incorrectly set the floatation.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates schematically a side view of an exemplary embodiment of an agricultural machine system including an agricultural work vehicle, formed as a self-propelled windrower, and a mower-conditioner machine, in accordance with an exemplary embodiment of the present invention;
FIG. 2 illustrates schematically a cross-section of the agricultural machine system of FIG. 1, showing the agricultural work vehicle and the mower-conditioner machine, with portions broken away, in accordance with an exemplary embodiment of the present invention;
FIG. 3 illustrates schematically the agricultural machine system of FIG. 1, with portions broken away, with a rod of a lift actuator of the agricultural work vehicle in a fully raised position, in accordance with an exemplary embodiment of the present invention;
FIG. 4 illustrates schematically the agricultural machine system of FIG. 1, with portions broken away, with the rod of the lift actuator of the agricultural work vehicle extended such that a lift arm of the agricultural work vehicle is partially drooped with the mower-conditioner machine on the ground, in accordance with an exemplary embodiment of the present invention;
FIG. 5 illustrates schematically a cross-section of the agricultural machine system of FIG. 1, showing the agricultural work vehicle and the mower-conditioner machine, with portions broken away, in accordance with another exemplary embodiment of the present invention; and
FIG. 6 illustrates a flow diagram showing a method of using an agricultural machine system, in accordance with an exemplary embodiment of the present invention.

### DETAILED DESCRIPTION OF THE INVENTION

The terms "forward", "rearward", "left" and "right", when used in connection with an agricultural vehicle, an agricultural machine, and/or components thereof are usually determined with reference to the direction of forward operative travel of the agricultural vehicle and/or agricultural machine, but they should not be construed as limiting. The terms "longitudinal" and "transverse" are determined with reference to the fore-and-aft direction of the agricultural vehicle and/or agricultural machine and are equally not to be construed as limiting. The terms "downstream" and "upstream" are determined with reference to the intended direction of crop material flow during operation, with "downstream" being analogous to "rearward" and "upstream" being analogous to "forward."

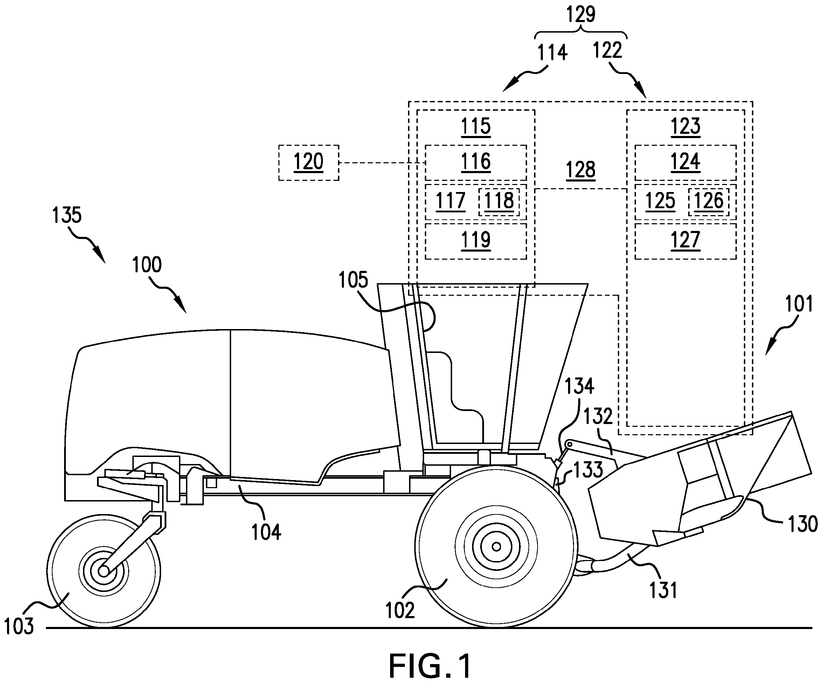

Referring now to the drawings, and more particularly to FIG. 1, there is shown an embodiment of an agricultural machine system 135 according to the present invention, system 135 including an agricultural work vehicle 100 (which can be referred to as a work vehicle, or an agricultural vehicle) and an agricultural machine 101 (which, at least in some embodiments of the present invention, can be referred to as an agricultural header, a header, an agricultural head, a head, an agricultural implement, an implement, an agricultural attachment, or an attachment). Agricultural work machine 101 is being pushed by, and is thus coupled with, agricultural work vehicle 100, agricultural machine 101 being configured for performing an agricultural operation within a field. In accordance with an embodiment of the present invention, agricultural work vehicle 100 can be formed as a self-propelled windrower (SPW), and agricultural work machine 100 can be formed as a mower-conditioner machine 100 (which can be referred to as a mower-conditioner), as shown in FIG. 1. The agricultural operations performed in the field by mower-conditioner 101 are mowing and conditioning, according to this embodiment of the present invention. On the other hand, system 135 can be any kind of agricultural system that traverses a field and performs one or more agricultural operations.

Work vehicle 100 can be an operator-driven SPW or an autonomous SPW. However, in some embodiments, work vehicle 100 may correspond to any other suitable vehicle configured to push a mower-conditioner machine across a field or that is otherwise configured to facilitate the performance of a mowing-conditioning operation, including an autonomous mower-conditioner vehicle. It should be appreciated that mower-conditioner 101, while shown as being pushed by SPW 100, may also be a self-propelled mower-conditioner that does not rely on a separate vehicle for propulsion and/or power to function. It should be further appreciated that work vehicle 100 may be configured as a tractor configured to tow mower-conditioner 101.

Work vehicle 100 includes a pair of front wheels 102, a pair of rear wheels 103, and a chassis 104 (which can also be referred to as an agricultural work vehicle frame 104 or SPW frame 104) coupled to and supported by the wheels 102, 103. An operator's cab 105 may be supported by a portion of the chassis 104 and may house various input devices for permitting an operator to control the operation of work vehicle 100 and/or mower-conditioner 101. Additionally, work vehicle 100 may include an engine and a transmission mounted on chassis 104. The transmission may be operably coupled to the engine and may provide variably adjusted gear ratios for transferring engine power to wheels 102 via a drive axle assembly. Though not shown, work vehicle 100 may be coupled to mower-conditioner 101 in part via a power take-off (PTO) (which includes a PTO shaft) and any other suitable ways, including chains, or the like. As such, work vehicle 100 may, for example, guide mower-conditioner 101 toward crop material standing in the field, such that mower-conditioner 101 in FIG. 1 is a push-type mower-conditioner 101.

Mower-conditioner 101 is coupled with vehicle frame 104 and includes frame 130, a cutting mechanism for cutting crop material, and a crop conditioner for conditioning the crop material (i.e., breaking, splitting, bending, crushing, cracking, and/or crimping crop material).

It should be appreciated that the configuration of work vehicle 100 described above and shown in FIG. 1 is provided only as one example. Thus, it should be appreciated that the present disclosure may be readily adaptable to any manner of work vehicle configuration. For example, in an alternative embodiment, a separate frame or chassis may be provided to which the engine, transmission, and drive axle assembly are coupled. Still other configurations may use an articulated chassis to steer work vehicle, or rely on tracks in lieu of wheels 102, 103. Additionally, as indicated previously, work vehicle 100 may, in some embodiments, be configured as an autonomous vehicle. In such embodiments, work vehicle 100 may include suitable components for providing autonomous vehicle operation and, depending on the vehicle configuration, need not include the operator's cab 105.

Additionally, it should be appreciated that the configuration of mower-conditioner 101 described above and shown in FIG. 1 is provided only as one example. Thus, it should be appreciated that the present disclosure may be readily adaptable to any manner of mower-conditioner configuration, or other agricultural machines, such as a vehicle and/or implement.

Further, work vehicle 100 includes at least one lift actuator 133 and at least one tilt actuator 134. In the embodiment of vehicle 100 shown in FIG. 1, vehicle 100 includes two lift actuators 133 and one tilt actuator 134, each lift actuator 133 being positioned at lateral ends of vehicle 100, and tilt actuator 134 being at a transversely central location of vehicle 100. Actuators 133, 134 (as with any reference herein to an actuator in accordance with exemplary embodiments of the present invention) can be any suitable actuator configured to move lift arms 131 and tilt arm 132, respectively (below). By way of example and not limitation, actuators 133, 134 can be a fluid actuator (such as a hydraulic actuator or a pneumatic actuator), an electric actuator (such as an electromechanical actuator or an electrohydraulic actuator), an electronic actuator, and/or a mechanical actuator. Herein, actuators 133, 134 are discussed as being formed each as a fluid actuator, more specifically, as a hydraulic actuator assembly, according to an exemplary embodiment of the present invention (actuators 133, 134 can be referred to herein, alternatively, as actuator, fluid actuator, hydraulic cylinder, or hydraulic cylinder assembly). Such hydraulic cylinder assemblies 133, 134 can include a cylinder (which can also be referred to as a barrel), a piston, and a rod, can be single-acting or double-acting, can be in a hydraulic closed circuit or an open circuit, and can use hydraulic oil as its working fluid. Such hydraulic cylinder assemblies 133, 134 are well-known in the art.

Further, vehicle 100 includes at least one lift arm 131, and mower-conditioner 101 includes at least one tilt arm 132. In the embodiment of system 135 shown in FIG. 1, vehicle 100 includes two lift arms 131, and mower-conditioner 101 includes one tilt arm 132. Each lift arm 131 is positioned at lateral ends of mower-conditioner 101, and tilt arm 132 is positioned at a transversely central location of mower-conditioner 101. Each lift arms 131 pivotably couples with respective ones of lift actuators 133 as well as frame 104 of vehicle 100, and tilt arm 132 pivotably couples with tilt actuator 134 and is also coupled with frame 130.

Further, agricultural machine system 135 includes a control system 129 (which can be referred to as a unified control system 129). Unified control system 129 includes control system 114 of tractor 100, control system 122 of mower-conditioner 101, and, optionally, a control system (not shown) of a data center (not shown) that is cloud-based, Internet-based, and/or remotely located (this control system of the data center can be substantially similar to control systems 114, 122, having a controller, a processor, memory, data, and instructions, as described below with respect to control systems 114, 122). Control system 114 includes controller 115, and control system 122 includes controller 123. Further, unified system 129 can be said to include controller system 128, which includes controllers 115, 123. Control system 129, and thus also control systems 114, 122, are operatively coupled with each of frames 104, 130, and thus also with tractor 100 and mower-conditioner 101. Control system 114, in whole or in part, is further included as part of work vehicle 100, and control system 122, in whole or in part, is further included as part of mower-conditioner 101.

Further, work vehicle 100 includes control system 114, which includes controller 115, which includes a processor 116, memory 117, data 118, and instructions 119. Control system 114 can further include an input/output device 120 such as a laptop computer (with keyboard and display), a touchpad (including keypad functionality and a display), and/or one or more switches, device 120 being configured for a user to interface therewith. Device 120 can be a plurality of devices spaced apart, for example, in cab 105 that allows operator to make inputs to controller 115.

Further, mower-conditioner 101 includes control system 122, which includes controller 123, which includes a processor 124, memory 125, data 126, and instructions 127. Controller 123 can communicate with controller 115, so that controller 115 outputs information to the display of input/output device 120 of work vehicle 100, thereby informing a user of various conditions of mower-conditioner 101. Further, mower-conditioner 101, as indicated, includes frame 130 (which can be referred to as mower-conditioner machine frame 130, or more generally as a machine frame 130) to which all of the components of mower-conditioner 101 are directly or indirectly coupled. Control system 122, in whole or in part, can be coupled with frame 130.

Further, in general, controllers 115, 123 may each correspond to any suitable processor-based device(s), such as a computing device or any combination of computing devices. Each controller 115, 123 may generally include one or more processor(s) 116, 124 and associated memory 117, 125 configured to perform a variety of computer-implemented functions (e.g., performing the methods, steps, algorithms, calculations and the like disclosed herein). Thus, each controller 115, 123 may include a respective processor 116, 124 therein, as well as associated memory 117, 125, data 118, 126, and instructions 119, 127, each forming at least part of the respective controller 115, 123. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the respective memory 117, 125 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD), and/or other suitable memory elements. Such memory 117, 125 may generally be configured to store information accessible to the processor(s) 116, 124, including data 118, 126 that can be retrieved, manipulated, created, and/or stored by the processor(s) 116, 124 and the instructions 119, 127 that can be executed by the processor(s) 116, 124. In some embodiments, data 118, 126 may be stored in one or more databases.

Tractor controller 115, herein, is assumed to be the primary controller for controlling operations of tractor 100, and mower-conditioner controller 123, herein, is assumed to be the primary controller for controlling operations of mower-conditioner 101, though it is understood that at different times each of controllers 115, 123 can control any of the other of the controllers 115, 123. Controllers 115, 123, as indicated in FIG. 1, can be in communication with the other of controllers 115, 123, thereby forming unified control system 129, such that any or all information associated with any controller 115, 123 can be shared with the other of controllers 115, 123, and any controller 115, 123 can perform the functions of the other controllers 115, 123. Controllers 115, 123 can communicate with each other in any suitable manner, such as a wired connection or a wireless connection, such as radio signals (RF), light signals, cellular, WiFi, Bluetooth, Internet, via cloud-based devices such as servers, and/or the like. Controllers 115, 123 can be configured to perform any of the functions of any of the other controllers 115, 123. Controllers 115, 123 can be a part of any network facilitating such communication therebetween, such as a local area network, a metropolitan area network, a wide area network, a neural network, whether wired or wireless. Control system 129, and controller system 128, are operatively coupled with tractor 100 and mower-conditioner 101, in particular with frames 104, 130. According to an embodiment of the present invention, tractor controller 115 can issue commands to mower-conditioner controller 123. This is assumed to be the case herein, unless otherwise stated. According to an alternative embodiment of the present invention, mower-conditioner controller 123 can issue commands to tractor controller 115 (such as for ISOBUS III or higher implements and/or vehicles). This is assumed to be the case herein, unless otherwise stated.

Control system 129 can include additional sensors or other inputs. Control system 114 can further include a GPS (not shown) mounted on tractor 100 (the tractor GPS). The tractor GPS senses the location of tractor 100 within the field, as is known, and this data can be provided to controllers 115, 123. Similarly, control system 122 can further include a GPS (not shown) mounted on mower-conditioner 101 (the mower-conditioner GPS). The mower-conditioner GPS senses the location of mower-conditioner 101 within the field, as is known, and this data can be provided to controllers 115, 123. Further, the operator, by way of device 120, can input or make certain settings. Control system 129 can further include any number additional control systems (with their individual controllers, processors, memory, data, and instructions, substantially similar to what is described above with reference to control systems 114, 122), and any such control system can have input/output devices as a part thereof and/or connected thereto.

Alternatively, any control system structures of mower-conditioner 101 may be deemed to be a part of control system 114. That is, controller 123 may be omitted, and any sensors or actuators of mower-conditioner 101 may be controlled by controller 115.

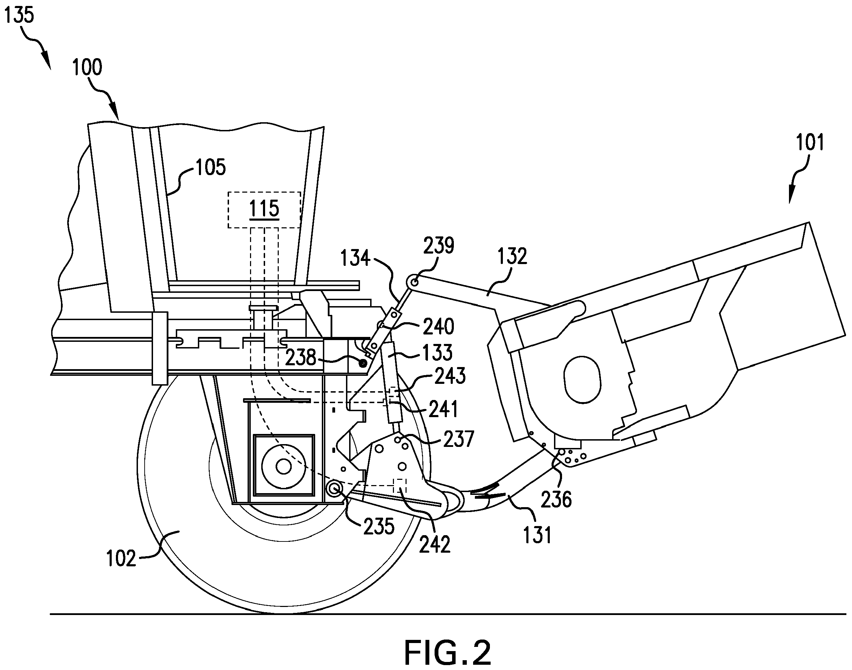

Referring now to FIG. 2, there is shown a cross-section of system 135 including vehicle 100 and mower-conditioner 101, with portions broken away. The cross-section is taken along a longitudinally extending vertical plane at a location that allows for visibility of key structures shown in FIG. 2. Vehicle 100 is shown to include lift arm 131 (the other lift arm 131 (the far side lift arm 131) compared to what is visible in FIG. 1 (which is the near side lift arm 131)), lift cylinder 133, and tilt cylinder 134. Mower-conditioner 101 is shown to include tilt arm 132. Further, vehicle 100 includes a pivot connection 235 between lift arm 131 and frame 104. Mower-conditioner 101 includes a pivot connection 236 between lift arm 131 and frame 130. Vehicle 100 includes a pivot connection 237 between lift arm 131 and lift actuator 133. Vehicle 100 includes a pivot connection 238 between frame 104 and tilt actuator 134. Vehicle 100 includes a pivot connection 239 between tilt arm 132 and tilt actuator 134. Vehicle 100 includes a pivot connection 240 between frame 104 and lift actuator 133 (pivot connection is shown in hidden lines in FIG. 2). Each pivot connection with frame 104 or frame 130 can be made by way of intermediate structures, such as brackets, mounting features, or the like. Though not shown, each pivot connection 235, 236, 237, 238, 239, 240 defines a respective pivot axis, which is perpendicular to the page of FIG. 2 and is that which structures - namely, lift arm 131, tilt arm 132, lift actuator 133, and tilt actuator 134 - pivot respectively thereabout in one or both directions.

Control system 114 (and thus also vehicle 100) further includes pressure sensor 241 and can include position sensor 242 and/or position sensor 243. Though structures 241, 242, 243 are deemed to be parts of control system 114 such that their output signals route to controller 115, one or more of structures 241, 242, 243 can be deemed to be a part of control system 122 (and thus also of mower-conditioner 101) such that their signals route to controller 123 and, optionally, onward to controller 115.

Pressure sensor 241 (which can be a pressure transducer) is operatively coupled with frames 104 and/or 130 and lift actuator 133 and can be positioned at any suitable location (schematically shown in FIG. 2), such as internal to the cylinder of lift actuator 133. More specifically, pressure sensor 241 can be connected to, for example, the cylinder of lift actuator 133, such as to pressure side of the cylinder. Pressure sensor 241 is configured for sensing an internal pressure within the cylinder of actuator 133 on the pressure side and for outputting a pressure signal, to controller 115, corresponding to the internal pressure that is sensed. This internal pressure thus corresponds to a pressure in a hydraulic lift circuit associated with lift actuator 133.

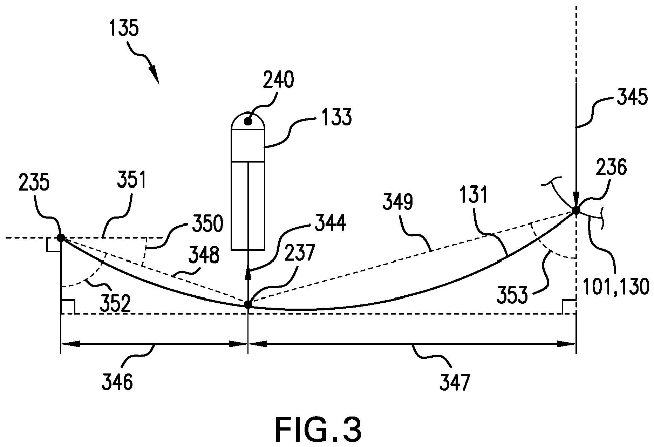

Position sensor 242 can be positioned at any suitable location so as to sense a position of lift arm 131 (which extends from pivot connection 235 to pivot connection 236) and is shown schematically positioned in FIG. 2 on lift arm 131. Position sensor 242 can be, for example, an external potentiometer and be configured for measuring an angle 350 and/or angle 352 (FIG. 3) of lift arm 131 directly, in view of the fact that there can be a direct relationship between a rotation of lift arm 131 about the pivot axis of pivot connection 235 and a rotation of position sensor 242. Position sensor 242 is thus configured for sensing a position of lift arm 131 and outputting, to controller 115, a position signal corresponding to the position of lift arm 131 sensed by position sensor 242.

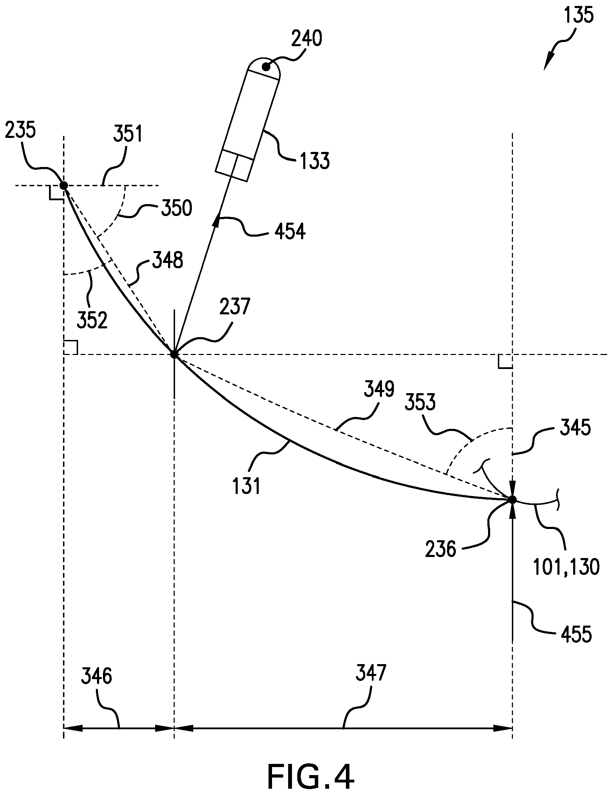

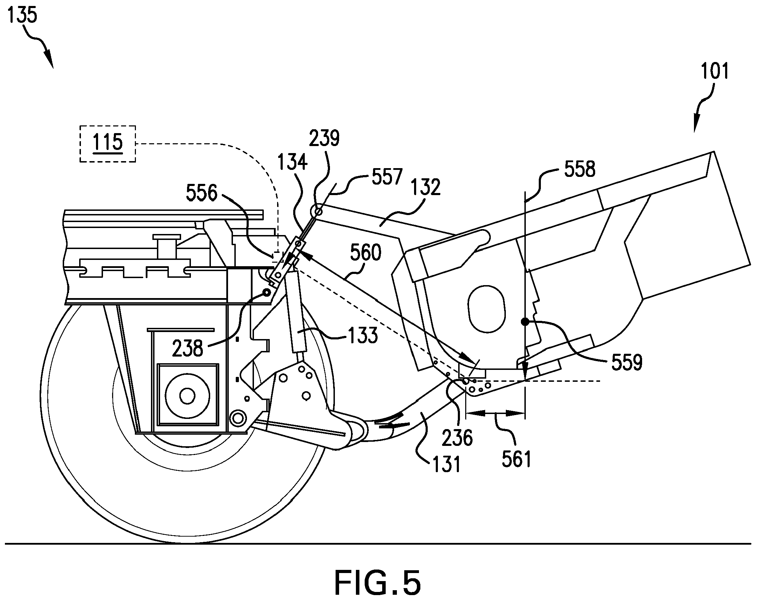

Position sensor 243 can be positioned at any suitable location so as to sense a position of the rod of lift actuator 133. This position of the rod can then be used to determine angles 350 and/or 352 and thereby subsequently to determine the position of lift arm 131, which can be determined by controller 115. Thus, position sensor 243 can be located, for example, inside of the cylinder of lift actuator 133 so as to sense the position of the rod and/or the piston and thus the relative extension of the rod (i.e., whether the rod is fully retracted, fully extended, or positioned somewhere therebetween). Position sensor 243 is thus configured for sensing a position of the rod and outputting, to controller 115, a position signal corresponding to the position of the rod sensed by position sensor 243, this position signal being used by controller 115 to determine the position of lift arm 131. More specifically, position sensor 243 (and/or position sensor 242) can be used to calculate an angle of lift arms 131 (angles 350 and/or 352, below), which can be used to calculate the perpendicular arm lengths (L_{LA} and Lₐᵣₘ), which can be used to calculate the weight of header 101 (F_{head}) and also the force of floatation (F_{F})(more below). For purposes of clarity, F_{head} is labeled as 345 in FIGS. 3 and 4 and as 558 in FIG. 5, so as to distinguish between the methodologies employed in determining F_{head} in FIGS. 3-4 as compared to FIG. 5.

Controller 115 is configured for receiving the pressure signal from pressure sensor 241, the position signal of lift arm 131 from position sensor 242, and the position signal of the rod from position sensor 243. Controller 115 is then configured for determining a weight of header 101 (header weight) based at least in part on the pressure signal from pressure sensor 241, the position signal of lift arm 131 from position sensor 242, and the position signal of the rod from position sensor 243. Upon determining the weight of header 101 (F_{head}, discussed below), controller 115 is configured for then automatically determining, based at least in part on the weight of header 101, a floatation pressure (P_{F}, discussed below)(which can also be referred to as a header floatation pressure) within lift cylinder 133 for an on-ground floatation of header 101. An on-ground floatation of header 101 is well-known in the art and thus will not be described in detail; generally speaking, the on-ground floatation occurs when header 101 is enabled to float on the ground as header 101 traverses the ground, thereby enabling header 101, for example, to rise, in a dampened manner (for example, using an accumulator), as header 101 encounters certain field features, such as raised terrain or fixed obstacles. Once controller 115 determines the flotation pressure to be maintained by lift actuator 133, an actuator (such as a solenoid valve or the like that is assigned to lift actuator 133) can cause hydraulic fluid to flow into or out of the cylinder of lift actuator 133 in order to establish the determined floatation pressure by lift actuator 133. Pressure sensor 241 or any other pressure sensor can be used to sense the pressure within the cylinder of lift actuator 133 and to output this value to controller 115, so that controller 115 can continue to adjust the actuator so as to maintain the determined floatation pressure of lift actuator 133 during operation of mower-conditioner 101 when mower-conditioner 101 is in an on-ground float mode.

Referring now to FIG. 3, there is shown schematically system 135, with portions broken away. More specifically, shown are lift arm 131 extending between pivot connections 235 and 236, with the rod of lift actuator 133 connected to lift arm 131 at pivot connection 237. The rod of lift actuator 133 is in the fully retracted position, resulting in lift arm 131 being fully raised (further, it can be that the rod of tilt actuator 134 is fully retracted such that header 101 is fully tilted aft, though this is not necessary). Because this is a schematic drawing (which is also the case in FIG. 4), the positioning of lift actuator 133 between pivot connections 237 and 240 is only representative; thus, any positioning of lift actuator 133 is within the scope of the present invention. To obtain the flotation pressure for lift actuator 133, the weight of header 101 is first calculated. This is done so, starting with the recognition that the sum of the moments (that is, the torques) about pivot connection 235 (more specifically, the pivot axis of pivot connection 235) is zero (Moment = force * distance). The two forces of interest are: the force of lift actuator 133 (F_{LA}, shown by arrow 344, which is coaxial with the longitudinal axis of the rod of lift actuator 133 and directed in the direction of arrow 344); and the weight of header 101 (F_{head}, shown by arrow 345, directed vertically downward toward the ground). Thus, from the sum of the moments is derived the following equation, with assumptions being made that this equation is sufficiently accurate (though, more precision can be obtained using force resolution): (F_{LA})(L_{LA}) = (F_{head})(L_{LA} + Lₐᵣₘ), wherein L_{LA} is the perpendicular distance (or length) 346 between pivot connections 235 and 237, and Lₐᵣₘ is the perpendicular distance (or length) 347 between pivot connections 237 and 236 (more specifically, the pivot axes associated with these pivot connections, for example). Further, for F_{LA}, an equivalent can be substituted using the formula that pressure = force/area, and thus force = pressure * area, rendering F_{LA} = (P_{LA})(Aₚᵢₛₜₒₙ), wherein P_{LA} is the pressure in the lift circuit sensed by pressure sensor 241, and Aₚᵢₛₜₒₙ is the surface area of the surface of the piston in lift actuator 133, this surface facing back towards the rod in the embodiment of FIG. 2 (down in FIG. 2) and thus the pressure side of the cylinder. Thus, F_{head} = [(P_{LA})(Aₚᵢₛₜₒₙ)( L_{LA})]/(L_{LA} + Lₐᵣₘ). Further, L_{La} and Lₐᵣₘ can be determined using what is sensed by position sensor 242 and/or position sensor 243 and knowing fixed geometries involved, for example, the straightline distance of line 348 between pivot connections 235 and 237, and the straightline distance of line 349 between pivot connections 237 and 236 (more specifically, the pivot axes associated with these pivot connections, for example). For instance, angle 350 (formed by a horizontal reference line 351 and line 348 can be determined from position sensors 242 and/or 243) can be used to calculate angle 352 (formed by line 348 and a vertical reference line), which can be used to calculate L_{LA}, using L_{LA} = (length of line 348)(sin(angle 352)). Further, when header is fully raised (as in FIG. 2), angle 352 is a known angle, as is angle 353 (similarly, when header is in full droop (fully dropped down without interference from the ground), angles 352 and 353 are also known). Thus, Lₐᵣₘ can also be calculated in a similar way: Lₐᵣₘ = (length of line 349)(sin(angle 353)). Thus, F_{head} can be determined. Further, when determining header weight (that is, F_{head}), controller system 128 (such as by way of controller 115) is configured for using a pressure - that is, P_{LA} - associated with (more specifically, in) lift actuator 133.

Referring now to FIG. 4, there is shown schematically system 135, with portions broken away. The rod of lift actuator 133 is at least partially (optionally, fully) extended, such that lift arms 131 are partially drooped with mower-conditioner machine 101 being on the ground ready for operation (that is, lift arms 131 and header 101 are in the mowing position). Lift arm 131 is not fully dropped down when mower-conditioner 101 is on the ground. Now that the header weight (F_{head}) has been determined (as described above), the floatation pressure for lift actuator 133 can now be determined. Similar to above, this determination starts with the recognition that the sum of the moments (that is, the torques) about pivot connection 235 (more specifically, the pivot axis of pivot connection 235) is zero (Moment = force * distance). The three forces of interest are: the floatation force of lift actuator 133 (F_{F}, shown by arrow 454, which is coaxial with the longitudinal axis of the rod of lift actuator 133 and directed in the direction of arrow 454); and the weight of header 101 (F_{head}, shown by arrow 345, directed vertically downward toward the ground, F_{head} being known from the determination above); and the force that the ground exerts against lift arm 131 and/or mower-conditioner 101 (F_{ground}, shown by arrow 455, directed vertically upwardly). Thus, from the sum of the moments is derived the following equation, with assumptions being made that this equation is sufficiently accurate (though, more precision can be obtained using force resolution): (F_{F})(L_{LA}) = (F_{head} - F_{ground})(L_{LA} + Lₐᵣₘ). Further, for F_{F}, an equivalent can be substituted using the formula that pressure = force/area, and thus force = pressure * area, rendering F_{F} = (P_{F})(Aₚᵢₛₜₒₙ), wherein P_{F} is the floatation pressure to be determined. Thus, P_{F} = [(F_{head} - F_{ground})(L_{LA} + Lₐᵣₘ)]/[(Aₚᵢₛₜₒₙ)(L_{LA})]. F_{head} is determined above with respect to FIG. 3. L_{LA} and Lₐᵣₘ are determined similarly to what is described above with respect to FIG. 3, but with some exception. Angles 352 and 353 are known at full droop, as they are known when the rod is fully raised. However, lift arm 131 is not at full droop in FIG. 4, when header 101 is on the ground, such as when system 135 is moving on flat ground with header 101 on the ground (thus, it is necessary to measure angle 350 in order to obtain an actual header weight and also the floatation pressure (which is a setting) with lift arms 131 lowered less than full droop). Thus, the rod of lift actuator 133 and lift arm 131 occupy an intermediate position. Similar to above with respect to FIG. 3, L_{LA} = (length of line 348)(sin(angle 352)), wherein angle 352 can be calculated upon ascertaining angle 350 using position sensor 242 and/or position sensor 243. Further, angle 353 can be deemed to known as well, for example, upon ascertaining angle 352, such as by way of a predetermined algorithm relating angles 352 and 353 together or by way of prior testing making direct correspondences between angle 353 given a specific angle 352. F_{ground} is a constant, and is the weight of header 101 on the ground at the proper setting for the floatation pressure. Further, F_{ground} is predetermined in the control logic in controller 115 (or controller system 128) and is specific to a given header 101 or, more specifically, the specific type of header 101. Thus, P_{F} can be determined and is used by controller 115 to adjust the pressure in lift actuator 133 to P_{F}.

Thus, when determining the floatation pressure (P_{F}) controller system 115 is configured for using a predetermined ground force (F_{ground}). Though F_{ground} is a predetermined value, F_{ground} can be adjusted. That is, F_{ground} can be selectively adjusted based at least in part on at least one operating condition. That is, F_{ground} can have a predetermined value that serves as the default setting, which applies in most conditions. Optionally, cab 105 can contain a setting reflecting this default value. However, if the harvesting conditions are such that the operator wants to operate system 135 at high speed (higher than normal, such as in dry conditions), then a higher (heavier) F_{ground} (higher than the default value) would likely be optimal. Optionally, cab 105 can contain another setting reflecting this higher F_{ground}. On the other hand, if the harvesting conditions are such that the operator wants to operate system 135 at low speed (lower than normal, such as in muddy conditions), then a lower (lighter) F_{ground} (lower than the default value) would likely be optimal. Optionally, cab 105 can contain yet another setting reflecting this lower F_{ground}. Accordingly, an operator control panel in cab 105, such as device 120, can include three preload settings (default, high, low F_{ground}) and, optionally, an additional setting that is not preloaded but enables the operator to customize a setting for F_{ground} (thereby choosing a different value for F_{ground} than the three preload settings).

In summary, according to an exemplary embodiment of the present invention, the present invention advantageously provides for using lift circuit pressure feedback (P_{LA}) to determine the current weight of header 101, then using this pressure to determine the proper floatation pressure to provide the desired floatation pressure setting (P_{F})(which is associated with the ground force (F_{ground})). One or more pressure sensors 241 are included to the pressure side of lift arm cylinders of lift arm actuators 133 to enable pressure feedback. Lift arm position sensors 242, 243 are utilized to provide position feedback of lift arms 131 (one such lift arm being positioned to attach to each lateral end of mower-conditioner 101). Active floatation setting control logic is provided in controller 115 (or, more broadly, controller system 128). The control logic uses header weight and header type to set the proper floatation pressure (P_{F}). First, controller 115 must know which header 101 (i.e., header type) is on SPW 100. This can be accomplished either by operator input, or through header identification pins in the SPW/header electrical connection [referring to the pin connections]. Each header 101 has a desired floatation ground force (F_{ground}) preprogrammed into controller 115. For example, if testing and experience has shown that a lateral end of a given header 101 should require x-lbs. of force to lift, this force is doubled (because header 101 has left and right lateral ends) and is programmed into controller 115 as a ground force (F_{ground}). Lift cylinder internal pressure, that is, the floatation pressure (P_{F}), is calculated based on the geometry of mower-conditioner machine 101. The geometry in question is: cylinder piston surface area (either rod or barrel end, depending on the configuration of the lift system)(i.e., Aₚᵢₛₜₒₙ); the length of lift arm frame pivot (235) to cylinder connection (237)(that is, the length 346, which is L_{LA}); the length of lift arm frame pivot (235) to header connection (236)(that is, the lengths 346 and 347, which is L_{LA} + Lₐᵣₘ); and the position of lift arm 131 (associated with the extension of the rod of lift actuator 133). During use, the values of L_{LA} and Lₐᵣₘ (which can be referred to as the "effective" perpendicular lengths) are based upon angles 350 and/or 352 and need to be recalculated depending upon a height of lift arms 131 (the lift height).

In use, when operation (mowing) begins, the operator will be prompted to fully lift header 101, if header 101 has not already been fully lifted during transport. At this time (or any time that header 101 has been fully lifted prior to operation), controller 115 records the internal pressure (P_{LA}, sensed by pressure sensor 241) required to suspend header 101 at the fully raised position. This pressure (P_{LA}) is then used by controller 115 to calculate the weight of header 101 (F_{head}) based the internal cylinder pressure (P_{LA}) and the moment created about the frame pivot (235) of lift arms 131 (the sensing and calculations can be done for one or both lift arms 131). Control system 114 also takes into account the angle (350 and/or 352) of the lift arms 131 (based in part on fixed geometry, i.e., lift arm frame pivot location (235), header pivot location (236), cylinder pivot location (237), and the length of lift arm 131) when calculating F_{head}. Thus, the internal cylinder pressure (P_{LA}), which is required to suspend the full weight of header 101, is used to calculate F_{head}, which is then used to determine a pressure (P_{F}) required to suspend, or float, the weight of the header 101 (F_{head}) minus the ground force (F_{ground}), based on the geometry of lift arm 131. When header 101 is lowered, the final position of the lift arms 131 is recorded, and the proper internal cylinder pressure (P_{F}) is calculated, based on this geometry, and is set by a system pressure reducing valve (PRV) in an accumulator floatation circuit. During operation, the internal lift pressure (P_{F}) is maintained by control system 114 and/or 122 to provide constant floatation ground force (F_{ground}) independent of operator input. Should header 101 become heavier during operation, due to accumulation of crop or soil on header 101, control system 114 is configured to compensate for this by weighing header 101 every time header 101 is fully raised and by recalculating the proper floatation pressure (P_{F}) for the current header weight to maintain the predetermined ground force (F_{ground}). Thus, in summary of the interaction between control logic of controller 115 and operator steps, according to one embodiment of the present invention, the following logical progression can occur: controller 115 identifies header 101 on SPW 100; operator raises header 101; controller 115 records internal cylinder pressure (P_{LA}); operator lowers header 101; controller 115 calculates the proper header floatation pressure (P_{F}) based on the recorded header weight (F_{head}) and the header lowered position; controller 115 adjusts the actual header floatation pressure to the calculated (desired) value (P_{F}).

Referring now to FIG. 5, there is shown a cross-section of system 135 including vehicle 100 and mower-conditioner 101, with portions broken away (FIG. 5 is substantially similar to FIG. 2, but highlights different features). The cross-section is taken along a longitudinally extending vertical plane at a location that allows for visibility of key structures shown in FIG. 5. Vehicle 100 is shown to include the far side lift arm 131, lift cylinder 133, and tilt cylinder 134. Mower-conditioner 101 is shown to include tilt arm 132. Further, pivot connections 236, 238, 239 are also shown. With respect to FIG. 5 and the description related thereto, an alternative way is provided in which to determine the weight of header 101 (F_{head}), either in the alternative or in addition to determining F_{head} as shown and described with respect to FIG. 2. As in FIGS. 2 and 3, the rod of lift actuator 133 is fully retracted such that header 101 is fully raised, and the rod of tilt actuator 134 is fully retracted such that header 101 is fully tilted aft. Further, control system 114 (and thus also vehicle 100) includes pressure sensor 556 (sensor 556 can alternatively be deemed to be a part of control system 122 and thus of header 101, thereby routing an output signal of sensor 556 to controller 123 and, optionally, onward to controller 115). Pressure sensor 556 (which can be a pressure transducer) is operatively coupled with frames 104 and/or 130 and tilt actuator 134 and can be positioned at any suitable location (schematically shown in FIG. 5), such as internal to the cylinder of tilt actuator 134. More specifically, pressure sensor 556 can be connected to, for example, the cylinder of tilt actuator 134, such as to a pressure side of the cylinder. Pressure sensor 556 is configured for sensing an internal pressure (P_{TA}) within the cylinder of actuator 134 on the pressure side and for outputting a pressure signal, to controller 115, corresponding to the internal pressure that is sensed. This internal pressure thus corresponds to a pressure in a hydraulic lift and/or tilt circuit associated with tilt actuator 134. Further, controller 115 is configured for receiving the pressure signal from pressure sensor 556. Controller 115 is then configured for determining the weight of header 101 based at least in part on the pressure signal from pressure sensor 556. Upon determining the weight of header 101 (F_{head}), controller 115 is configured for then automatically determining, based at least in part on the weight of header 101, the floatation pressure (P_{F}), as discussed above. Once controller 115 determines the flotation pressure (P_{F}) to be maintained by lift actuator 133, an actuator (such as a solenoid valve or the like that is assigned to lift actuator 133) can cause hydraulic fluid to flow into or out of the cylinder of lift actuator 133 in order to establish the determined floatation pressure (P_{F}) by lift actuator 133. Pressure sensor 241 or any other pressure sensor can be used to sense the pressure within the cylinder of lift actuator 133 and to output this value to controller 115, so that controller 115 can continue to adjust the actuator so as to maintain the determined floatation pressure (P_{F}) of lift actuator 133 during operation of mower-conditioner 101 when mower-conditioner 101 is in an on-ground float mode.

To obtain the weight of header 101, controller 115 can calculate F_{head}. This is done so, starting with the recognition that the sum of the moments (that is, the torques) about pivot connection 236 (more specifically, the pivot axis of pivot connection 236) is zero (Moment = force * distance). The two forces of interest are: the force of tilt actuator 134 (F_{TA}, shown by arrow 557, which is coaxial with the longitudinal axis of the rod of tilt actuator 134 and directed in the direction of arrow 557); and the weight of header 101 (F_{head}, shown by arrow 558, directed vertically downward toward the ground, through the center of gravity 559 of header 101). Thus, from the sum of the moments is derived the following equation, with assumptions being made that this equation is sufficiently accurate (though, more precision can be obtained using force resolution): (F_{TA})(L_{TA}) = (F_{head})(L_{head}), wherein L_{TA} is the perpendicular distance (or length) 560 between pivot connection 236 (more specifically, the pivot axis associated with this pivot connection, for example (the pivot axis being the basis for any lengths herein involving a pivot connection)) and the longitudinal axis of tilt actuator 134, which is coaxial with the axis along which F_{TA} acts, and L_{head} is the perpendicular distance (or length) 561 between pivot connection 236 and header center of gravity 559, as shown in FIG. 5. Thus, F_{head} = (F_{TA})(L_{TA})/L_{head}. For F_{TA}, an equivalent can be substituted using the formula that pressure = force/area, and thus force = pressure * area, rendering F_{TA} = (P_{TA})(Aₚᵢₛₜₒₙ), wherein P_{TA} is the pressure in the tilt circuit sensed by pressure sensor 556, and Aₚᵢₛₜₒₙ is the surface area of the surface of the piston in tilt actuator 134, this surface facing either towards or away the rod in the embodiment of FIG. 5 but optionally on the pressure side of the cylinder. Thus, F_{head} = [(P_{TA})(Aₚᵢₛₜₒₙ)( L_{TA})]/(L_{head}). Further, L_{TA} and L_{head} are known from fixed geometries at the fully raised and fully tilted aft positions of lift and tilt actuators 133, 134 (assuming center of gravity 559 has not changed due to, for example, soil and/or plant accumulation on header 101). Even so, as indicated, center of gravity 559 of header 101 may change during use of header 101, due to accumulation of soil and/or vegetation (or anything else) on header 101. To account for such changing of center of gravity 559, mower-conditioner 101 can include additional sensor(s) to detect an uneven loading of header 101 (for example, when header 101 is fully raised and fully tilted aft, as in FIG. 5) and thereby to recalculate the location of center of gravity 559, so as to be able to adjust the value for L_{head}. Thus, when determining the header weight, controller 115 is configured for using a pressure (P_{TA}) associated with at least one tilt actuator 134. Further, based on this alternative embodiment, it is possible to use the internal pressure (P_{TA}) of tilt cylinder 134 to calculate header weight 558, though this may require data on the location of center of gravity 559 of header 101, which can change during operation due to crop and soil accumulation.

In use (with respect to the embodiment of FIG. 5), the header weight (F_{head}) can be calculated by controller 115 as described with respect to FIG. 5, upon the operator fully raising and tilting aft header 101. Header weight 558 can be used in the alternative to header weight 345 or in addition thereto; if used in addition thereto, then the averages of header weights 345, 558 can be used for further calculations by controller 115. Thus, header weight 558 (or the average with header weight 345) can be used by controller 115 to calculate the floatation pressure (P_{F}) as described above.

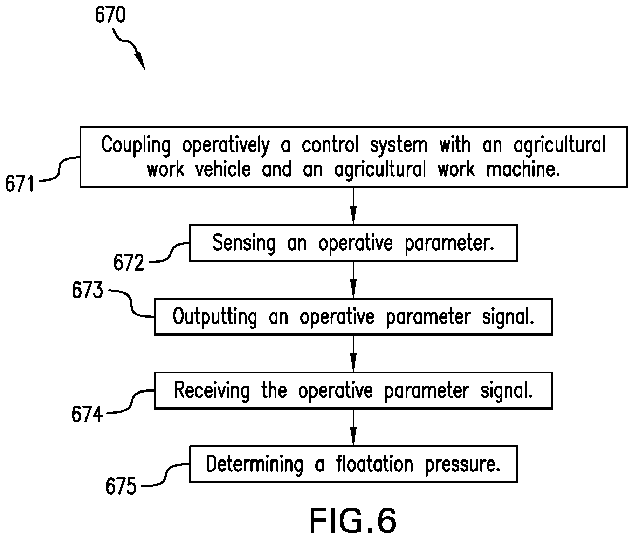

Referring now to FIG. 6, there is shown a flow diagram showing a method 670 of using an agricultural machine system 135, the method 670 including the steps of: coupling 671 operatively a control system 129 with an agricultural work vehicle 100 and an agricultural work machine 100, control system 129 including a sensor 241, 556 and a controller system; sensing 672, by the sensor 241, 556, an operative parameter (P_{LA}, P_{TA}); outputting 673, by the sensor 241, 556, an operative parameter signal corresponding to the operative parameter (P_{LA}, P_{TA}); receiving 674, by controller system 129, the operative parameter signal; and determining 675, by controller system 129, based at least in part on the operative parameter signal, a floatation pressure (P_{F}) for an on-ground floatation of the agricultural work machine 101. Agricultural work vehicle 100 can be a self-propelled windrower 100, and agricultural work machine 101 can be a header 101 formed as a mower-conditioner machine 101. Controller system 128 can be configured for determining a header weight 345, 558 (F_{head}) and for automatically determining the floatation pressure (P_{F}) based at least in part on the header weight 345, 558 (F_{head}). Agricultural work vehicle 100 can include at least one lift actuator 133 and at least one tilt actuator 134, when determining the header weight 345, 558 (F_{head}) the controller system 128 optionally being configured for using a pressure (P_{LA}) associated with the at least one lift actuator 133 as the operative parameter or a pressure (P_{TA}) associated with the at least one tilt actuator 134 as the operative parameter. When determining the floatation pressure (P_{F}), the controller system can be configured for using a predetermined ground force (F_{ground}) which can be selectively adjusted based at least in part on at least one operating condition.

It is to be understood that the steps of method 670 are performed by controller 115, 123, 128 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by controller 115, 123, 128 described herein, such as the method 670, is implemented in software code or instructions which are tangibly stored on a tangible computer readable medium. The controller 115, 123, 128 loads the software code or instructions via a direct interface with the computer readable medium or via a wired and/or wireless network. Upon loading and executing such software code or instructions by controller 115, 123, 128, controller 115, 123, 128 may perform any of the functionality of controller 115, 123, 128 described herein, including any steps of the method 670.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention.

## Claims

1. An agricultural machine system (135), comprising:
an agricultural work vehicle (100);
an agricultural work machine (101); and
a control system (129) operatively coupled with the agricultural work vehicle (100) and the agricultural work machine (101), the control system (129) including:
a sensor (241, 556) configured for sensing an operative parameter and outputting an operative parameter signal corresponding to the operative parameter; and
a controller system (129) configured for receiving the operative parameter signal and determining, based at least in part on the operative parameter signal, a floatation pressure for an on-ground floatation of the agricultural work machine (101).

2. The agricultural machine system (135) of claim 1, wherein the agricultural work vehicle (100) is a self-propelled windrower (100), and the agricultural work machine (101) is a header (101) formed as a mower-conditioner machine (101).

3. The agricultural machine system (135) of claim 2, wherein the controller system (129) is configured for determining a header weight (145, 558) and for automatically determining the floatation pressure based at least in part on the header weight (145, 558).

4. The agricultural machine system (135) of claim 3, wherein the agricultural work vehicle (100) includes at least one lift actuator (133) and at least one tilt actuator (134), when determining the header weight (145, 558) the controller system (129) is configured for using a pressure associated with the at least one lift actuator (133) as the operative parameter or a pressure associated with the at least one tilt actuator (134) as the operative parameter.

5. The agricultural machine system (135) of claim 4, wherein when determining the floatation pressure the controller system (129) is configured for using a predetermined ground force which can be selectively adjusted based at least in part on at least one operating condition.

6. A method of using an agricultural machine system (670), the method comprising the steps of:
coupling operatively a control system (129) with an agricultural work vehicle (100) and an agricultural work machine (101), the control system (129) including a sensor (241, 556) and a controller system (129);
sensing, by the sensor (241, 556), an operative parameter;
outputting, by the sensor (241, 556), an operative parameter signal corresponding to the operative parameter;
receiving, by the controller system (129), the operative parameter signal; and
determining, by the controller system (129), based at least in part on the operative parameter signal, a floatation pressure for an on-ground floatation of the agricultural work machine (101).

7. The method of claim 6, wherein the agricultural work vehicle (100) is a self-propelled windrower (100), and the agricultural work machine (101) is a header (101) formed as a mower-conditioner machine (101).

8. The method of claim 7, further comprising steps of determining a header weight (345, 558) and of automatically determining the floatation pressure based at least in part on a header weight (345, 558) of the header (101).

9. The method of claim 8, wherein the agricultural work vehicle (100) includes at least one lift actuator (133) and at least one tilt actuator (134), and further comprising a step of, when determining the header weight (345, 558), using a pressure associated with the at least one lift actuator (133) or with the at least one tilt actuator (134) as the operative parameter.

10. The method of claim 8 or 9, further comprising a step of, when determining the floatation pressure the controller system (129), using a predetermined ground force which can be selectively adjusted based at least in part on at least one operating condition.
